# EUROPEAN PATENT SPECIFICATION

(11) **EP 0 675 516 B1**
(45) Date of publication and mention of the grant of the patent: **04.12.2002**
(21) Application number: 95103561.7
(22) Date of filing: 13.03.1995
(51) Int. Cl.: H01H 13/70, H05K 9/00

(54) **Sheath for cellular mobile telephone with a screening of electromagnetic emission into the sheath**
Hülle für zellularen mobilen Fernsprecher mit einer Abschirmung der elektromagnetischen Ausstrahlung in die Hülle
La gaine de téléphone mobile cellulaire avec un blindage de l'émission électromagnétique dans la gaine

(30) Priority: 01.04.1994 IT BO940142
(43) Date of publication of application: 04.10.1995
(73) Proprietor: STEFANO UNO S.r.l., 00168 Roma (IT)
(72) Inventor: Dellapasqua, Armando, I-47030 San Mauro Pascoli, (Forli) (IT); Guidi, Davide, I-47042 Cesenatico, (Forli) (IT)
(74) Representative: Sarpi, Maurizio

(56) References cited:
- DE-A- 4 104 038
- FR-A- 2 680 270
- US-A- 2 488 710
- US-A- 4 207 444

## Description

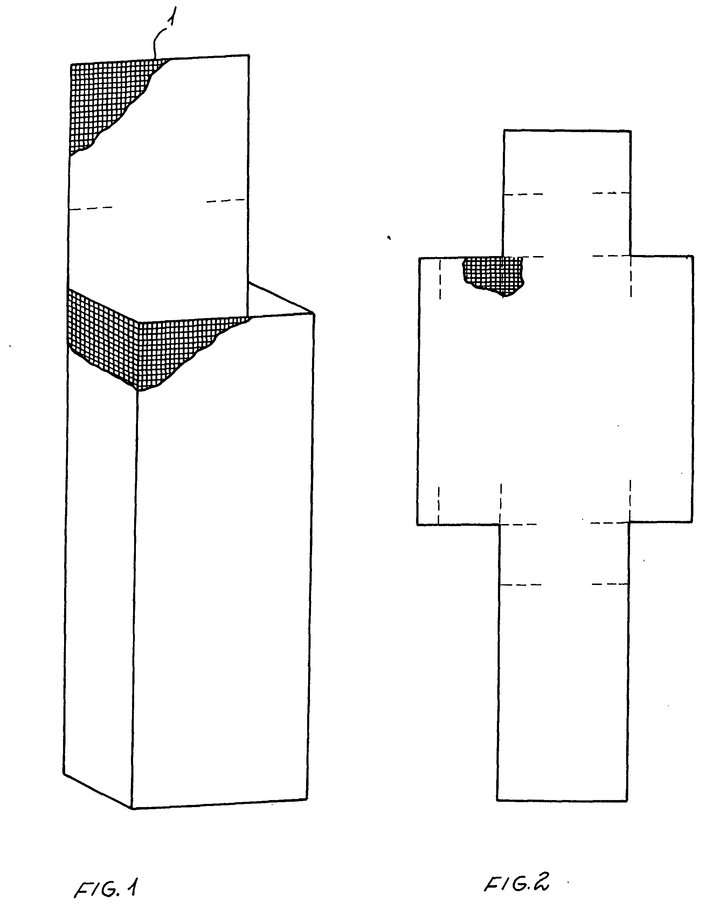

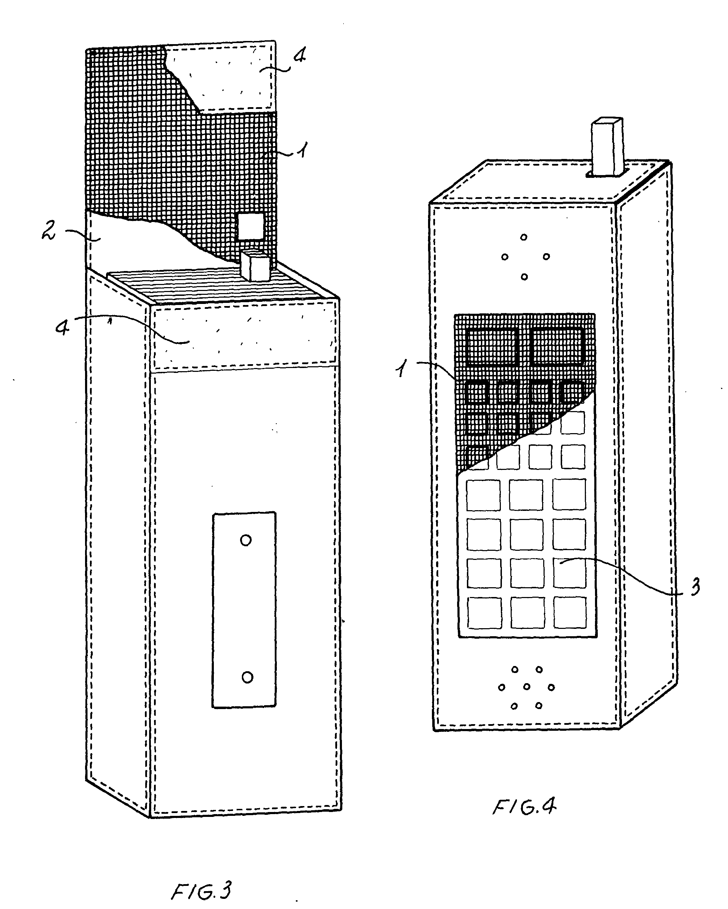

The invention refers to a new embodiment into the sheathes for the cellular mobile telephones consists of a screening of the outside face to be integrated inside the housing part of the sheathes. Said screening, which comes to be the essential feature of the invention, sensibly reduces the emission outside of the electromagnetic radiations. Being provided for completely wrapping the cellular telephone, with the same one inside the sheath, the screening covers also the opening for the push-button telephone so better protecting the human body from the radiations. In the current use of the cellular mobile telephones is unsolved the big problem to protect the user from the radioactive and electromagnetic waves which do harm both inside and outside organs of the body. It must to be considered that the symptoms to be found out for the presence of an energy, that one of emission of the cellular telephone, which comes to attack a second one, that of the human body, are easily to be seen in some immediate more showy aspects like dimming or loss of the sight, cerebral tiredness, loss of sensibility of the sence-organs, giddnesses and nauseas. The continuity of said esposition can moreover origin, with the organologic decay, also the growth of tumours. The current sheathes, to be used only to protect the cellular telephones from the accidental crashes and from the atmospheric agents and to permit the right grip of these very delicate electronic devices with miniaturized parts, are not able to offer an ordinary protection against said radiations. To better understand the difficulties which have had who has tried for resolving the problem, it is to be noted that the sheath, anyhow made, must not have covering part of big thickness. This because the big dimension causes problem for gripping the telephone and moreover hampers to easily transport it on the body, for example onto the belt, or into bags or handbags. The problem regarding the dimensions persists using the current cushion screenings forming sheathes with high encumbrance and consequently with the current means is impossible to solve the radiation problem. Consequently, up to now, on the base of precise and unbreakable market demands it has being necessary to renounce to a screening for said radiations. At present the sheathes for cellular telephones on the market are of two kinds: the first one of elastic film with insignificant thickness, to determine a protection sheath which comes to be in contact with the closed body of the contained cellular telephone, and a second one consists of leather or imitation of leather cases with inner coating where the thickness is that of the same leather. The invented screening permits to opportunely screen the inside part of the sheath and, having said screening an insignificant thickness, does not create the problem of big dimensions. Using said screening is so possible to protect user from the injurious radiations emitted by the cellular telephone without neglecting the necessity of smallest thickness and flessibility that a sheath must have. The invented screening permits a medium demolishing value of 40% of the injurious radiations emitted by the cellular telephone, however, said value may change on the base of the used frequences and of the components used. The invention consists of a screening 1 in nylon enriched with nickel and carbon yarns to be integrated with the inside face 2 of the sheath, where the surface of the screening 1 and the surface of the inside face 2 are in contact and come to contain and to protect the cellular telephone. Said screening 1 to be provided also for covering the opening 3 of the sheath to have access to the push-button telephone so to screen each part of the cellular telephone. In a preferred embodiment is provided a bi-faced material with the inside face consists of the screening 1 and with the outside face consists of the external wrapping structurat ed to contain the telephone. Using said bi-faced material the sheathes are realized with lower working time. The forming phase foresees at first the realization by punching of the screening 1 and of the sheath with its inside face 2. Said screening 1 is then integrated in composition on the inside face 2 of the sheath by means of sewing. In a preferred embodiment, realized as example, a parallelepipedal sheath is provided to be realized by coupling of the screening 1 in nylon enriched with nikel and carbon yarns and of a leather material with inside face 2. The opening by means of which the cellular telephone is introduced into the sheath housing is then to be closed by two self-sticking parts 4. Considering the high resistance to the traction permits by the material forming the screening 1, which acts like structuring of the sheath, it is permitted the coupling of said screened material with a second material of minimum thickness and big flessibility. A version of the invented screened sheath is illustrated in schematic views in the drawings of sheets 1 and 2. In sheet 1 fig. 1 apart view of the screening 1 in a possible parallelepipedal shape. Fig. 2 is view of the starting form realized by punching of the screening 1. In sheet 2 fig. 3 is view of a sheath with integrated the screening 1 in opening with in its inside a cellular mobile telephone. Fig.4 is perspective view in closing of the same sheath of fig. 3 with in its inside the cellular telephone.

## Claims

1. Sheath for cellular mobile telephone with a screening of the electromagnetic emission into the sheath, wherein the screening (1) in nylon enriched with nickel and carbon yarns is to be integrated with the inside face (2) of the sheath, where the surface of the screening (1) and the surface of the inside face (2) are in contact and come to contain and to protect the cellular telephone; and where said screening (1) is to be provided also for covering the opening (3) of the sheath to have access to the push-button telephone so to screen each part of the cellular telephone.

2. Sheath for cellular mobile telephone with a screening of the electromagnetic emission into the sheath, as defined in claim 1, **characterized in that** a bi-faced material is provided with the inside face consists of the screening (1) and with the outside face consists of the external wrapping structurated to contain the telephone, so using said bi-faced material the sheathes are realized with lower working time.

3. Sheath for cellular mobile telephone with a screening of the electromagnetic emission into the sheath, as defined in claim 1, **characterized in that** the forming phase foresees at first the realization by punching of the screening (1) and of the sheath with its inside face (2), said screening (1) is then integrated in composition on the inside face (2) of the sheath by means of sewing.

4. Sheath for cellular mobile telephone with a screening of the electromagnetic emission into the sheath, as defined in claim 1, **characterized in that** in a preferred embodiment a parallelepipedal sheath is provided to be realized by coupling of the screening (1) in nylon enriched with nikel and carbon yarns and of a leather material with inside face (2) and the opening, by means of which the cellular telephone is introduced into the sheath housing, is then to be closed by two self-sticking parts (4).

5. Sheath for cellular mobile telephone with a screening of the electromagnetic emission into the sheath, as defined in claim 1, **characterized in that** the high resistance to the traction of the material forming the screening (1), which acts like structuring of the sheath, permits the coupling of said screened material with a second material of minimum thickness and big flessibility.

## Patentansprüche

1. Etui für tragbare Funktelefone mit Abschirmung der elektromagnetischen Emissionen im Innern des Etuis, in dem die Abschirmung (1) aus mit Nickel und Kohlenstofffasern angereichertem Nylon in die Innenseite (2) des Etuis integriert ist und wo die Oberfläche der Abschirmung (1) und der Innenseite (2) in Kontakt stehen und das Funktelefon aufnehmen und schützen; ferner soll diese Abschirmung (1) auch dafür vorgesehen werden, die Öffnung (3) des Etuis zu bedecken, um zur Tastatur des Telefons Zugang zu haben, um so alle Teile des Funktelefons abzuschirmen.

2. Etui für tragbare Funktelefone mit Abschirmung der elektromagnetischen Emissionen im Innern des Etuis wie in der Forderung 1 definiert; das wesentliche Merkmal ist die Verwendung eines zweiseitigen Materials mit einer Innenfläche, die der Abschirmung (1) dient und einer Außenfläche, die aus einem Deckmaterial zur Aufnahme des Telefons besteht, so dass für die Herstellung der Etuis aus dem genannten, zweiseitigen Material eine kürzere Produktionszeit benötigt wird.

3. Etui für tragbare Funktelefone mit Abschirmung der elektromagnetischen Emissionen im Innern des Etuis wie in der Forderung 1 definiert; es ist dadurch charakterisiert, dass beim Zusammenbau zunächst durch Aushöhlung die Abschirmung (1) und das Etui mit seiner Innenfläche (2) hergestellt werden; die besagte Abschirmung (1) wird anschließend mit dem Innenteil (2) des Etuis durch eine Naht verbunden.

4. Etui für tragbare Funktelefone mit Abschirmung der elektromagnetischen Emissionen im Innern des Etuis wie in der Forderung 1 definiert; es ist dadurch charakterisiert, dass es in der bevorzugten Fertigung ein trapezförmiges Etui vorsieht, das hergestellt wird durch Vereinigung der Abschirmung (1) bestehend aus mit Nickel und Kohlenstofffasern angereichertem Nylon und der Innenseite (2) aus Ledermaterial; es ist mit einer entsprechender Öffnung versehen, die durch Klettverschluss verschlossen werden kann, wenn das Funktelefon sich im Etui befindet.

5. Etui für tragbare Funktelefone mit Abschirmung der elektromagnetischen Emissionen im Innern des Etuis wie in der Forderung 1 definiert; es ist dadurch charakterisiert, dass der hohe Zugwiderstand des Abschirmungsmaterials (1), welches die Struktur des Etuis bildet, es erlaubt, das besagte Abschirmungsmaterial mit einem zweiten Material von geringerer Stärke und großer Flexibilität zu vereinen.

## Revendications

1. Étui-gaine pour téléphones cellulaires portatifs avec écran de protection (blindage) contre les émissions électromagnétiques à l'intérieur de l'étui, dans la quelle le blindage (1) en nylon enrichie de fibres de carbone et de nickel est incorporée à la paroi interne (2) de l'étui et sa surface (1) est en contact avec celle de ladite paroi interne (2) de façon à envelopper et protéger le téléphone portable; ladite blindage (1) peut également être conçue de sorte à recouvrir l'ouverture (3) de l'étui pour l'accès au clavier du téléphone de façon d'envelopper tout les partis de l'appareil.

2. Étui-gaine pour téléphones cellulaires portatifs avec écran de protection (blindage) contre les émissions électromagnétiques à l'intérieur de 1 'étui comme défini au n°1, mais avec pour caractéristique de prévoir un matériau biface avec surface interne servant de blindage (1) et surface externe servant d'enveloppe externe ayant pour fonction de recevoir l'appareil, l'avantage étant que ledit matériel biface des étuis-gaines demande des délais de production inférieurs.

3. Étui-gaine pour téléphones cellulaires portatifs avec écran de protection (blindage) contre les émissions électromagnétiques à l'intérieur de l'étui comme défini au n°1, mais avec pour caractéristique que ce modèle prévoit, en phase de montage, le découpage à plat préalable de la protection (1) et de l'étui avec paroi interne (2); la protection (1) et la partie interne (2) de l'étui sont ensuite cousues l'une à l'autre.

4. Étui-gaine pour téléphones cellulaires portatifs avec écran de protection (blindage) contre les émissions électromagnétiques à l'intérieur de l'étui comme défini au n°1, mais avec pour caractéristique qu'est prévu, en phase de montage préférentiel, un étui-gaine en forme de parallélépipède obtenu en joignant protection (1) en nylon enrichi de fibres de nickel et de carbone et surface interne en cuir, l'ouverture est conçue de sorte que la gaine puisse se refermer à l'aide d'une fermeture velcro (4) une fois le portable introduit dedans.

5. Étui-gaine pour téléphones cellulaires portatifs avec écran de protection (blindage) contre les émissions électromagnétiques à l'intérieur de la gaine comme défini au n°1, mais avec pour caractéristique que la bonne résistance à la traction du matériau constituant la protection (1), qui agit comme structure de l'étui, permet d'accoupler ledit matériau protecteur à un second matériau d'épaisseur minime et de grande flexibilité.
